# EUROPEAN PATENT APPLICATION

(11) **EP 2 549 578 A2**
(43) Date of publication of application: **23.01.2013**
(21) Application number: 12188241.9
(22) Date of filing: 01.04.2008
(51) Int. Cl.: H01M 10/39, H01M 10/50, H01M 2/10, H01M 2/20

(54) **Battery mechanical packaging**

(30) Priority: 07.05.2007 US 745123
(62) Divisional of application: 08733037.9
(71) Applicant: General Electric Company, Schenectady, NY 12345 (US)
(72) Inventor: KUMAR, Ajith Kuttannair, Erie, PA Pennsylvania 16509 (US); MARLEY, Michael Patrick, Erie, PA Pennsylvania 16508 (US); BUTINE, John D., Erie, PA Pennsylvania 16511 (US); ELLSWORTH, Harold Alan, Lawrence Park, PA Pennsylvania 16531-0001 (US); DONNER, John L., Lawrence Park, PA Pennsylvania 16531-0001 (US); PELKOWSKI, Stephen, Lawrence Park, NY New York 16531-0001 (US)
(74) Representative: Goode, Ian Roy

(57) **Abstract**

Batteries are disclosed that include a plurality of cooling plates, a plurality of cells disposed between adjacent cooling plates, a plurality of insulating sheets disposed between adjacent cells, a plurality of bus bars interconnecting the plurality of cells, an inner casing surrounding the plurality of cooling plates, the plurality of cells, the plurality of insulating sheets, and the plurality of bus bars, an outer casing surrounding the inner casing so as to form a gap therebetween, a layer of insulating material disposed inside at least a portion of the gap, and several other structural features in different embodiments of the invention configured to prevent motion of the cells relative to one another.

## Description

### BACKGROUND OF THE INVENTION

### FIELD OF THE INVENTION

The present invention relates in general to batteries and, more particularly, to mechanical packaging of battery internal components.

### DESCRIPTION OF THE RELATED ART

In electric vehicles and in hybrid electric vehicles and non-vehicle applications (e.g., locomotives, off-highway mining vehicles, marine applications, buses and automobiles, cranes, to name a few), batteries are essential components used to store a portion of the energy that is regenerated during braking for later use during motoring or generated when the demand is low for later use, thus increasing fuel efficiency. In general, battery operating environments are harsh for several reasons, including, but not being limited to, large changes in environmental operating temperature, extended mechanical vibrations, and the existence of corrosive contaminants. In addition, charge and discharge are accomplished under severe conditions, including large amounts of discharging current at the time of acceleration of a heavy vehicle and large amounts of charging current at the time of braking. Nevertheless, given the high initial capital cost associated with the fact that normally these batteries are made up of many cells electrically connected to each other, hybrid vehicle batteries are expected to have extended lifetimes.

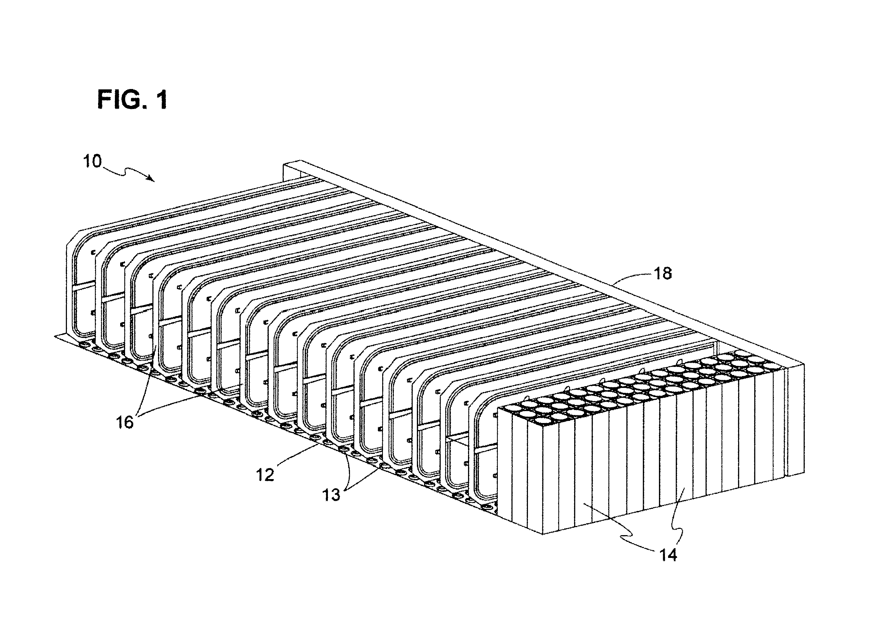

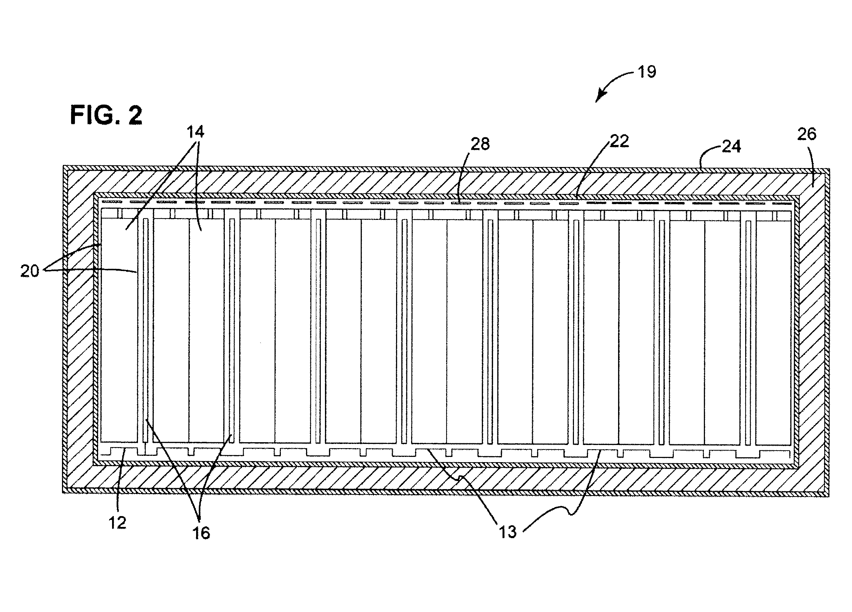

FIG. 1 illustrates an inner assembly 10 of a conventional battery 19 and FIG. 2 shows a cross-sectional view of the conventional battery 19 having the inner assembly 10 of FIG. 1. As illustrated, the inner assembly 10 of the conventional battery 19 includes a base plate 12, also known as a button sheet, having a plurality of buttons or protrusions 13 configured to support a plurality of cells 14 electrically connected to each other by a plurality of bus bars (not shown). Separating groups of cells 14, a plurality of cooling ducts or plates 16 supplied with air from a cooling header 18 is designed to maintain the cells 14 within a desired operating temperature range. As it will be apparent to one of ordinary skill, FIG. 1 is presented herein only for the purpose of illustrating components of the conventional battery 19, including only a small number of cells 14 for better clarity of the other features illustrated and described, and should not be considered as limiting the different embodiments disclosed in any way or as an illustration of a commercial product. For example, in some conventional batteries, different than what is illustrated in FIG. 1, a cooling plate 16 is provided between each row of cells 14.

As illustrated in FIG. 2, mica sheets 20 are packed between adjacent cells 14 so as to electrically insulate the cells 14 from each other and from the mechanical packaging of the conventional battery 19. The mechanical packaging of the conventional battery 11 also includes an inner casing 22, which envelops the inner assembly 10, separated from an outer casing 24 by a layer of insulation material 26. Typically, the space between the inner casing 22 and the outer casing 24 is evacuated in order to minimize heat transfer to and/or from the battery 11. A heater 28 is provided to raise the temperature of the battery to a desired operating level.

Many different types of batteries are known to exit; however, as understood by those of ordinary skill, current high-temperature batteries, such as, for example, Sodium Nickel Chloride batteries, are prone to failures due to mechanical vibration damage to internal components of the battery. Mechanical vibrations cause relative motion of the mica sheets 20 and the cells 14 with respect to each other, leading to loss in electrical connection between cells due to bus bar failures, electrical creep, and/or strike failures due to tight spaces, and damage of the mechanical and insulating property of the mica sheets. Other known technological challenges of conventional battery include, but are not limited to: creep and strike failures due to electrical isolation material separation; high energy, low frequency cell resonance due to flexible base; large cell translations due to resonant cell response; mechanical failure of joint between base plate and cooling duct, internal cell damage (hot cells), bus bar fractures, internal battery case damage, and heater sheet cracking and punctures due to large cell translation; vacuum loss due internal battery case damage; loss of heater continuity due to heater sheet cracking and punctures; loss of ability to maintain proper battery temperature due to loss of heater continuity, loss of cell conductivity (and/or proper operation); damage to inter-cell separator seal due to internal cell damage; and leaking of liquid sodium due to inter-cell separator seal damage.

It would therefore be desirable to develop a battery with improved reliability, reduced manufacturing cost, and extended lifetime to be used in high vibration environments of hybrid transportation vehicle, including locomotives.

### BRIEF SUMMARY OF THE INVENTION

One or more of the above-summarized needs or others known in the art are addressed by batteries that include a plurality of cooling plates, a plurality of cells disposed between adjacent cooling plates, a plurality of insulating sheets disposed between adjacent cells, a plurality of bus bars interconnecting the cells, an inner casing surrounding the plurality of cooling plates, the plurality of cells, the plurality of insulating sheets, and the plurality of bus bars, an outer casing surrounding the inner casing so as to form a gap therebetween, a layer of insulating material disposed inside at least a portion of the gap, and several other structural features in different embodiments of the invention configured to prevent motion of the cells relative to one another.

The above brief description sets forth features of the present invention in order that the detailed description that follows may be better understood, and in order that the present contributions to the art may be better appreciated. There are, of course, other features of the invention that will be described hereinafter and which will be for the subject matter of the appended claims.

In this respect, before explaining several embodiments of the invention in detail, it is understood that the invention is not limited in its application to the details of the construction and to the arrangements of the components set forth in the following description or illustrated in the drawings. The invention is capable of other embodiments and of being practiced and carried out in various ways. Also, it is to be understood that the phraseology and terminology employed herein are for the purpose of description and should not be regarded as limiting. As such, those skilled in the art will appreciate that the conception, upon which disclosure is based, may readily be utilized as a basis for designing other structures, methods, and systems for carrying out the several purposes of the present invention. It is important, therefore, that the claims be regarded as including such equivalent constructions insofar as they do not depart from the spirit and scope of the present invention.

Further, the purpose of the foregoing Abstract is to enable a patent examiner and the public generally, and especially the scientists, engineers and practitioners in the art who are not familiar with patent or legal terms or phraseology, to determine quickly from a cursory inspection the nature and essence of the technical disclosure of the application. Accordingly, the Abstract is neither intended to define the invention or the application, which only is measured by the claims, nor is it intended to be limiting as to the scope of the invention in any way.

### BRIEF DESCRIPTION OF THE DRAWINGS

A more complete appreciation of the invention and many of the attendant advantages thereof will be readily obtained as the same becomes better understood by reference to the following detailed description when considered in connection with the accompanying drawings, wherein:
FIG. 1 illustrates a perspective view of an inner assembly of a conventional battery;
FIG. 2 illustrates a cross-sectional view of a conventional battery having the inner assembly of FIG 1 ;
FIG. 3 illustrates an embodiment of the disclosed invention, including a cross- sectional view (FIG. 3A) taken along a cooling duct of the battery and front (FIG. 3B) and perspective views of the illustration shown in FIG. 3 A;
FIG. 4 illustrates a perspective view of another embodiment of the disclosed invention;
FIG. 5 illustrates a perspective view of yet another embodiment of the disclosed invention;
FIG. 6 illustrates a cross-sectional view of yet another embodiment of the disclosed invention taken along a cooling duct of the battery;
FIG. 7 illustrates yet another embodiment of the disclosed invention, including added beam sections in the form of ribs (FIG. 7A) or a plate (FIG. 7B) connected to an inner casing of the battery;
FIG. 8 illustrates a perspective view of an end portion of a battery cell according to yet another embodiment of the disclosed invention;
FIG. 9 illustrates a cross-sectional view taken along electrical connectors of adjacent cells of yet another embodiment of the disclosed invention, including a sheet of an electrically insulating material disposed on top of the cells extending along a direction substantially parallel to the bus bar (FIG. 9A), on top of the cells in a direction substantially parallel to the bus bar (FIG. 9B), and under the bus bar in a direction substantially transversely to that of the bus bar (FIG. 9C);
FIG. 10 illustrates yet another embodiment of the disclosed invention, including sheets disposed on top and bottom portions of the cells, the sheet disposed on the top portion of the cell having an integrated bus bar with electrical connections made by contact pressure;
FIG. 11 illustrates yet another embodiment of the disclosed invention, including a sheet disposed on a top portion of the cells, the sheet having an integrated bus bar with electrical connections made by a mechanical interference fit;
FIG. 12 illustrates yet another embodiment of the disclosed invention, including adjacent mica sheets and cells with roughened and/or corrugated surfaces in the form of complementary undulations (FIG. 12A) and protrusions and depressions (FIG. 12B);
FIG. 13 illustrates yet another embodiment of the disclosed invention, including a biasing member compressing the cells, mica sheets, and/or cooling plates against an inner casing of the battery;
FIG. 14 illustrates yet another embodiment of the disclosed invention, including a belt or wrap disposed around cells, mica sheets, and/or cooling plates of the battery;
FIG. 15 illustrates yet another embodiment of the disclosed invention, including mica sheets (FIG. 15A) and/or cooling ducts (FIG. 15B) of variable geometry;
FIG. 16 illustrates yet another embodiment of the disclosed invention, including mica sheets and/or cells (FIG. 16A) and cooling ducts and/or cells (FIG. 16B) of variable geometry;
FIG. 17 illustrates yet another embodiment of the disclosed invention, including cells that mechanically connected to a button sheet; and
FIG. 18 illustrates yet another embodiment of the disclosed invention, including a modified cell geometry to integrate a bottom portion of the cell into an insulated button sheet.

### DETAILED DESCRIPTION OF THE PREFERRED EMBODIMENTS

Referring now to the drawings, wherein like reference numerals designate identical or corresponding parts throughout the several views, several embodiments of the disclosed high-temperature battery will be described, including, but not being limited to, embodiments related to inner-assembly stiffening, battery-case stiffening, restriction of vertical cell motion, or combinations thereof.

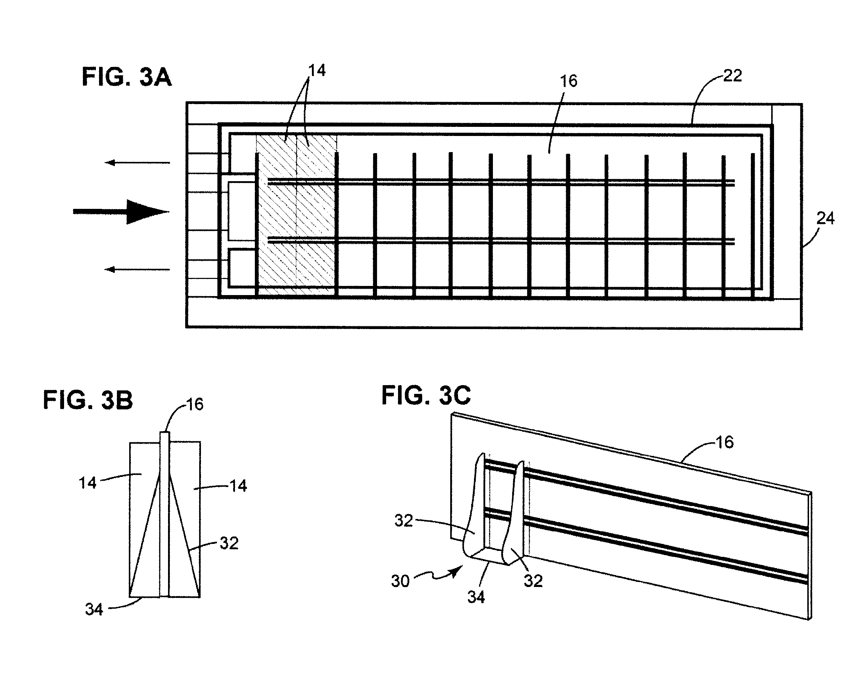

FIGS. 3-5 illustrate different embodiments related to making the inner assembly of a high-temperature battery stiffer. FIG. 3 illustrates the first embodiment, which includes the use of a plurality of joist hangers 30 to suspend the cells from a cooling duct or plate 16. FIG. 3 includes a cross-sectional view taken along a cooling duct of the battery (FIG. 3A) and front (FIG. 3B) and perspective (FIG. 3C) views of the illustration shown in FIG. 3A. As shown, the joist hangers 30 include vertically extending stirrups 32 attached to the cooling duct 16. Between adjacent stirrups 32, a base support 34 is disposed to provide support for the individual battery cells support by each joist hanger 30. In some instances, one base support 34 may be used to support more than one cell 14, while providing less stiffness to areas of the inner assembly where less mechanical vibration is expected. Thus, while a joist hanger 30 to support more than one cell 14 is contemplated by the present invention, a joist hanger 30 per cell 14 is preferred, as illustrated in FIG. 3. As understood by those of ordinary skill in the applicable arts, the joist hangers 30 may be attached to the cooling plate 16 made of a suitable material, thus eliminating the need to provide a button sheet while providing stiffer support for each cell and a stiffer inner assembly from front to back. In one embodiment, the joist hangers 30 include protrusions that are inserted in grooves provided in the cooling plates 16, as shown in FIG. 3.

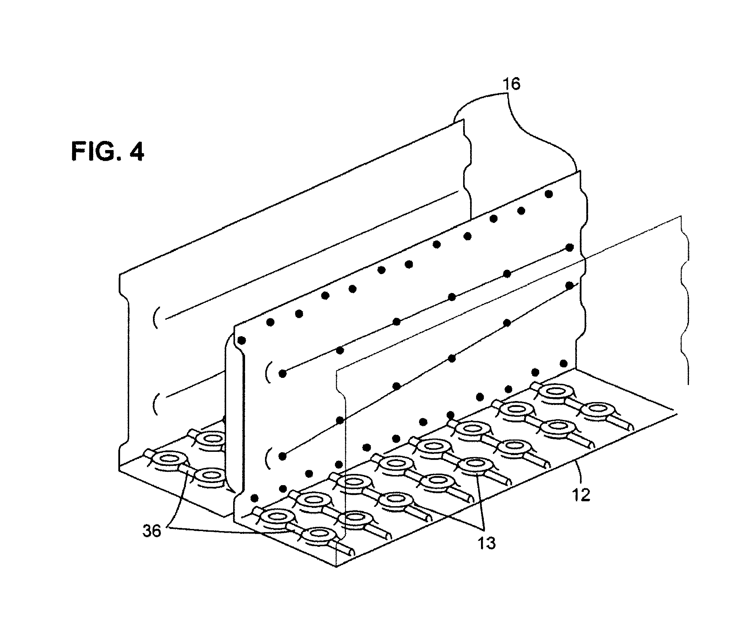

FIG. 4 illustrates another embodiment of the inner assembly 10 according to the disclosed invention. As shown, beam sections 36 are formed into the button sheet 12 between the buttons 13 in order to stiffen the inner assembly of the battery and to provide a stiffer support for the button sheet 12. In one form of this embodiment, the beam sections 36 are disposed in a direction substantially perpendicular to the cooling plates 16, as illustrated in FIG. 4; however, as understood by those of ordinary skill, these beam sections 36 may also be disposed diagonally or in any combination connecting the buttons 13. In addition, The cross-sectional shape of each beam section 36 may be, for example, but not as a limitation, triangular, square, or elliptical and may be selected as to maximize the overall stiffness of the button sheet 12 and manufacturing ease.

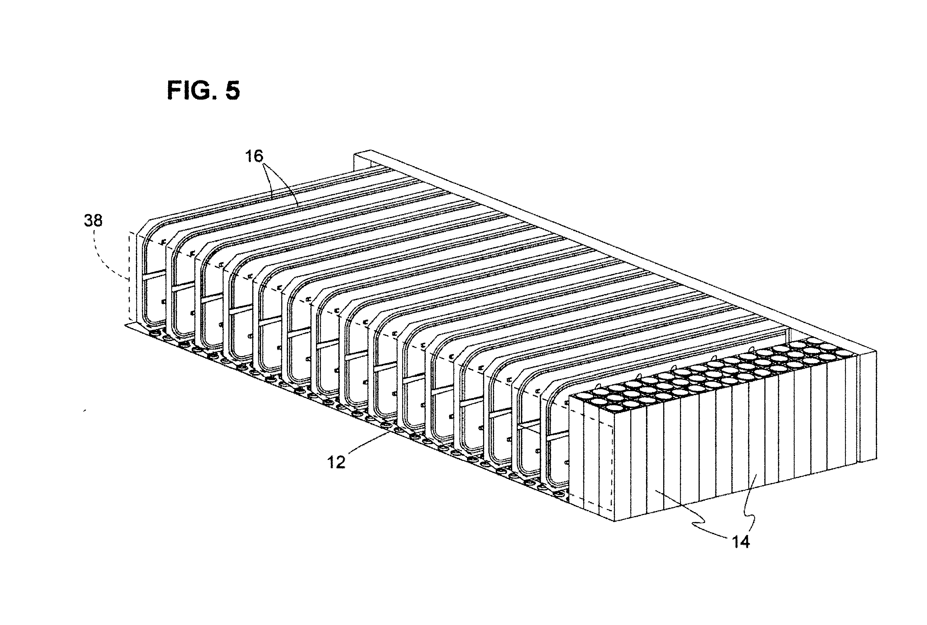

FIG. 5 illustrates yet another embodiment of the disclosed invention configured to stiffen the inner assembly of a hybrid battery. As shown, this embodiment includes the use of an interconnecting or brace member 38 configured to connecting the cooling ducts 16 at the backside of the battery. Variation of this embodiment may include fastening the interconnecting element 38 to the button sheet 12 and/or to both the button sheet 12 and the cooling ducts 16. Several different embodiments of the interconnecting element 38 are within the scope of the disclosed invention, including, but not being limited to, a strap, a band, a wire, a spring, and a metal sheet (flat or formed), the interconnecting element 38 being configured to allow for a more support of the button sheet 12, particularly if the same is fastened thereto using a high- integrity joint. In addition to the use of the interconnecting element 38, or in the alternative, increasing the thickness of both the cooling ducts 16 and of the button sheet 12 and/or to make such connection more continuous may increase the rigidity of the attachment of the cooling ducts 16 to the button sheet 12, thus stiffening the inner assembly of the battery, providing a more rigid support for the button sheet 12 as the thickness of the cooling plate 16 and button sheet 12 is increased, and limiting the vertical motion of the cells 14.

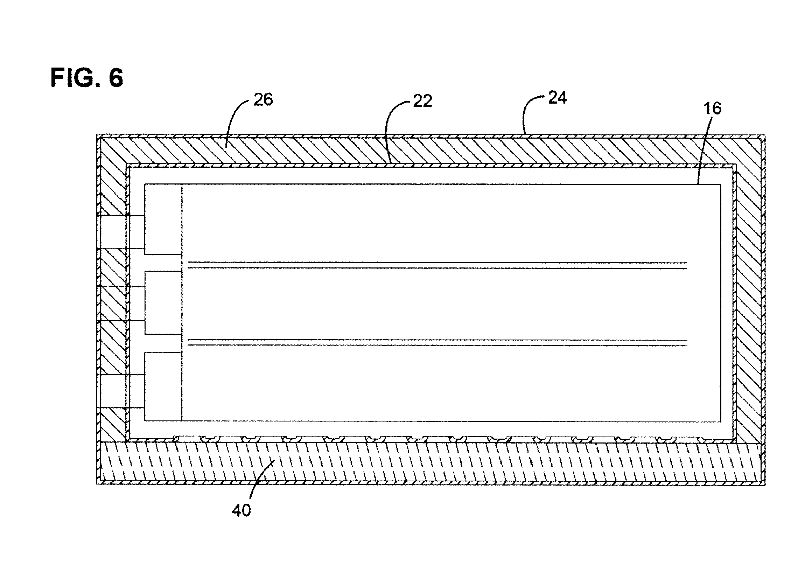

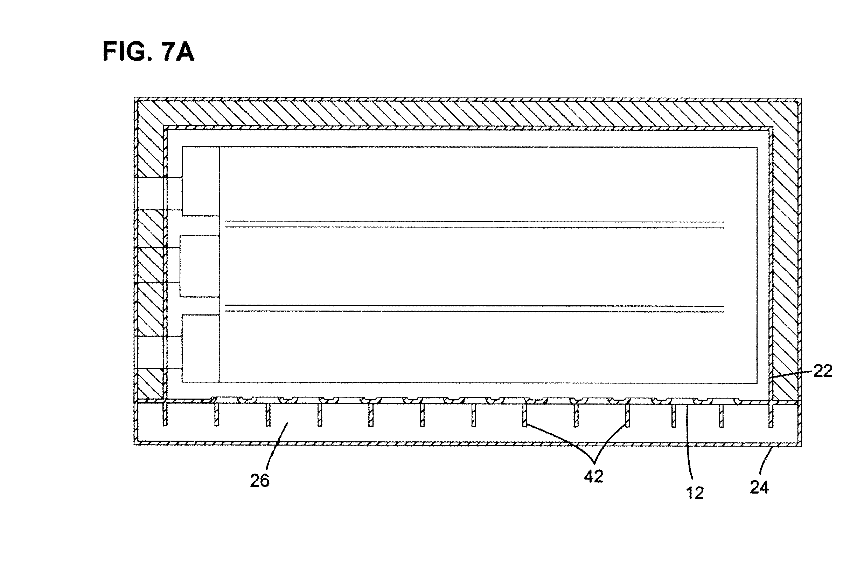

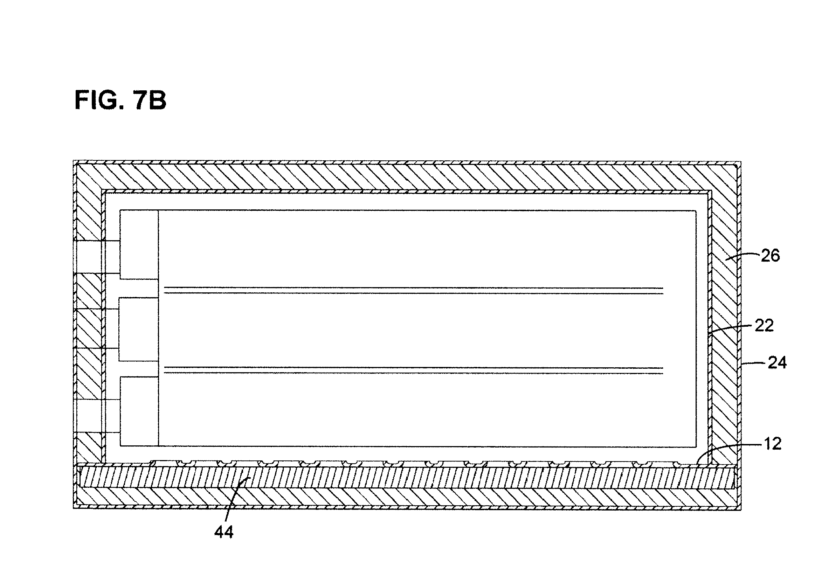

FIGS. 6 and 7 illustrate several embodiments of the disclosed invention configured to make the battery case stiffer and, thus, reduce damage thereto caused by relative motion of one or more of the different components of the battery due to mechanical vibration during use. FIG. 6 illustrates a cross-sectional view taken along the cooling plate 16 of an embodiment that includes the use of a firebrick 40 between the inner casing 22 and the outer casing 24 to support the button sheet 12. The firebrick 40 may be a continuous piece, as illustrated in FIG. 6, or it may be discrete pieces (not shown) disposed along the bottom of the button sheet 12. As appreciated by those of ordinary skill, the firebrick 40 will provide a stiff surface below the button sheet 12, thereby increasing the amount of pressure that can be applied to the battery case and making the inner casing 22 less flexible.

FIG. 7 illustrates yet another embodiment of the disclosed invention configured to stiffen the battery case. In this embodiment, added beam sections in the form of ribs 42 (FIG. 7A) or a plate 44 (FIG. 7B) are connected to the inner casing 22. As shown in FIGS. 7A and 7B, the ribs 42 or plate 44 are connected to the inner casing 22 so as to protrude into the insulation material 26, resulting in a stiffer inner casing 22 and providing an improved support for the button sheet 12. As understood by those of ordinary skill in the art, the ribs 42 and plate 44 may be connected to the inner casing 22 in a plurality of ways, including, but not being limited to, by welding. Alternatively, the ribs 42 and plate 44 may be connected or attached to the outer casing 24 so as to protrude into the insulation material 26. In this alternative embodiment, a stiffer outer casing 24 is obtained which can better withstand the addition of other fixtures thereto, allow for less overall deflection of the battery case, and provide a more rigid support for the inner assembly of the battery. In the embodiments discussed herein in relation to FIG. 7, the number and location of the ribs 42 and plate 44 may vary according to the desire to control the localized and/or overall stiffness of the battery case. As such, a rib 42 may be disposed below each button 13 of the button sheet 12 or discretely dispersed in any order or pattern as needed to provide the desired effect.

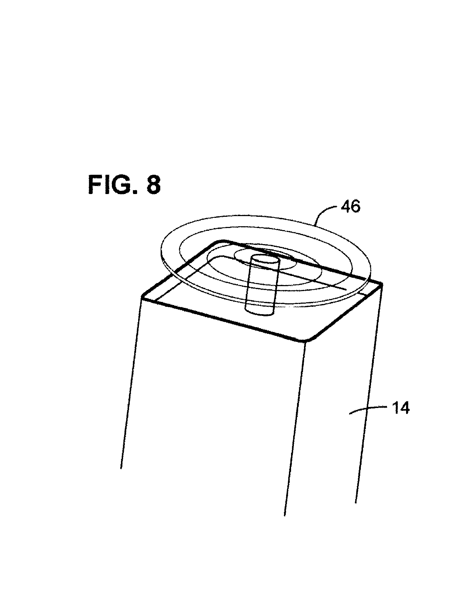

FIGS. 8-18 illustrate several embodiments of the disclosed invention configured to restrict vertical motion of the cells 14, thus reducing damage thereto due to mechanical vibration during use. In the first of such embodiments, as illustrated in FIG. 8 in the perspective view of an end portion of the cell 14, a biasing member 46 is disposed on the top portion of the cell 14, thereby providing a compressive load from the inner casing 22 (not shown) to the cell 14. The biasing member 46 may be in the form of a compressive disc (as illustrated) or in the form of a spring (not shown). As understood by those of ordinary skill in the applicable arts, adding the biasing member 46 to the top portion of each cell will reduce and/or eliminate the gap between the cells 14 and the inner casing 22, thereby providing a way to control a spring rate of individual cells and minimizing the relative motion of one cell with respect to another. As used herein, the spring rate of individual cells relates to the rate of motion of a cell 14 due to a spring force or stiffness generated by the cell itself and the surrounding cells. In some instances, a biasing member 46 may be disposed on top of discrete cells 14 in the battery, while providing less restriction to the vertical motion of the cells 14 in areas where the expectation of vertical motion is reduced. Thus, while a biasing member 46 disposed discretely on top of cells 14 is contemplated by the present invention, a biasing member 46 per cell 14 is favored.

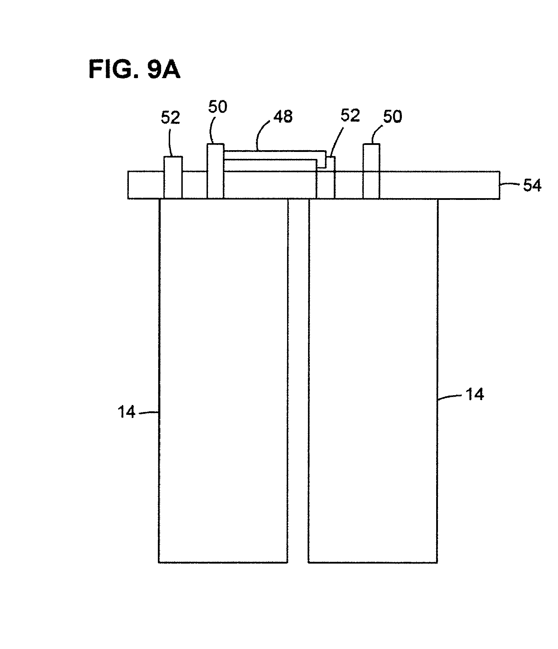

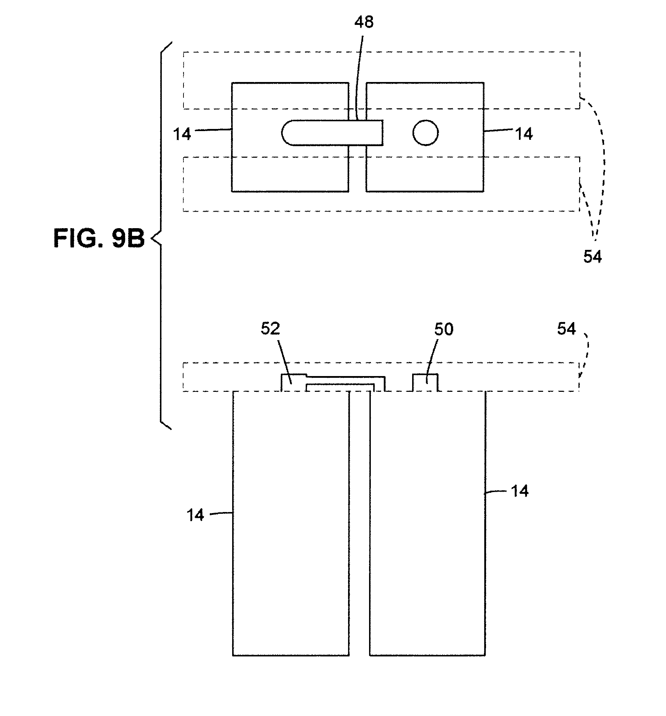

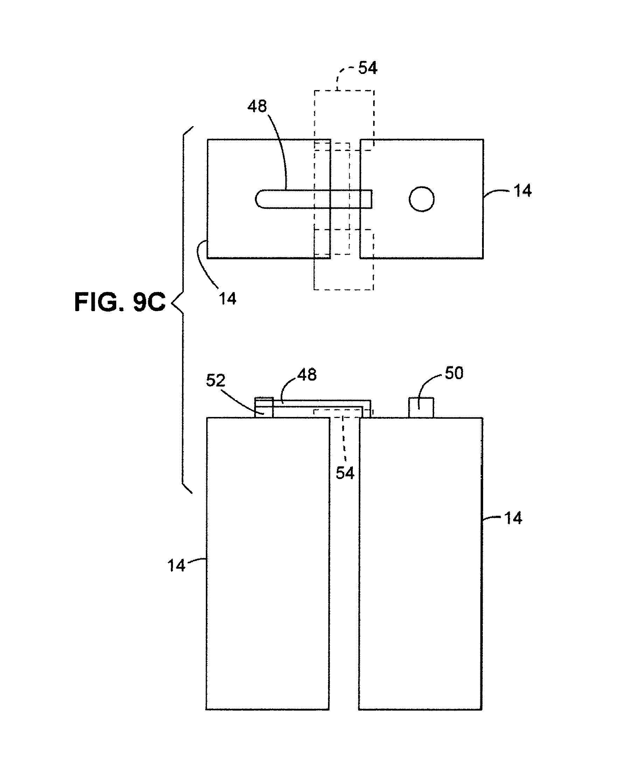

FIGS. 9A-9C illustrate various embodiments configured to restrict and/or limit vertical motion of the cells relative to each other associated with the use of a sheet of an electrically insulating material disposed over the top of the cell in various configurations designed to clamp down the cells. The embodiment of FIG. 9A includes a sheet 54 of electrically insulating material disposed on top of the cells 14 such that the battery terminals 50 and 52 protrude through the sheet 54 and are connected to each other by the bus bar 48 disposed above the sheet 54. As understood by those of ordinary skill, the orientation and the number of sheets 54 to be used may dependent on the amount of localized amount of vertical motion of the cells to be minimized. As illustrated in FIG. 9A, the sheet 54 extends along a direction substantially parallel to the bus bar 48 and includes openings on the surface in contact with the cells 14 to receive the top portions of the cells. As the sheet 54 clamps down the cells, the spring rate of the cells is better controlled, thereby limiting the relative motion of the cells with respect to each other. The sheet 54 may be supported on the inner casing of the battery and/or on the cooling ducts and made of mica, ceramic, or silicone ceramic. In the embodiment of FIG. 9B, as shows in the illustrated side and top views, the sheet 54 of insulating material is disposed on top of the cells 14 in a direction substantially parallel of the bus bar 48 so as to leave the electrical terminals 50 and 52 and the bus bar 48 connecting them exposed. In the embodiment of FIG. 9C, the sheet 54 of insulating material is applied under the bus bar 48, extending along a direction substantially transversely to that of the bus bar 48. As understood by those of ordinary skill, embodiments that combine the features of FIG. 9B and 9C are also within the scope of the subject matter disclosed.

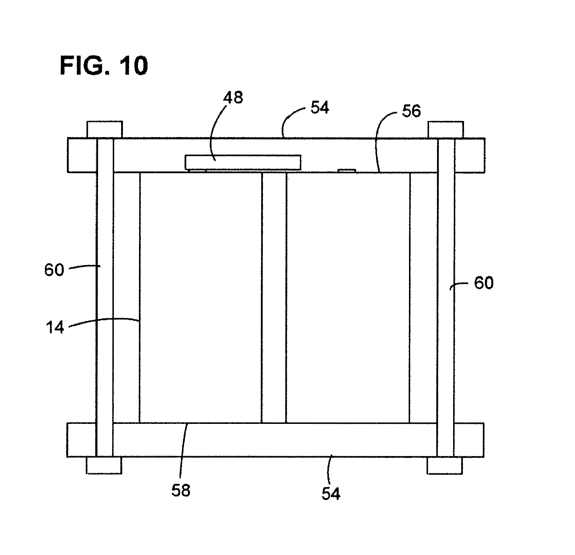

FIG. 10 illustrates yet another embodiment to restrict and/or limit vertical motion of the cells 14 relative to each other. In this embodiment, sheets 54 having the bus bar 46 integrated therein are applied to top portion 56 of the cells 14 so that no holes in the top sheet 54 are needed to accommodate the top portions of the cells 14 and similar sheets 54 without a bust bar 46 are applied to the bottom portion 58 of the cells. Electrical connections are made by contact pressure exerted by fasteners 60 connected to the sheets 54 applied to the top and bottom portions 56 and 58 of the cells 14. As understood by those of ordinary skill in the applicable arts, the embodiment of FIG. 10 permits the control of the relative motion of cells with respect to each other, and the elimination of the need for independent bus bars and for brazing the bus bar 48 to the battery electrical terminals 50 and 52. As further appreciated by those of ordinary skill, the integrated bus bar 46 of the embodiment shown in FIG. 10 may also be used without the fasteners 60 and the embodiment shown in FIG. 9 may also be used with fasteners 60 as just explained with the embodiment illustrated in FIG. 10.

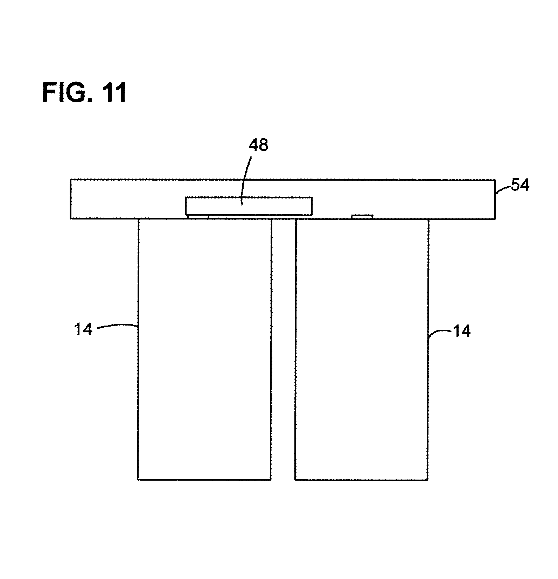

FIG. 11 illustrates yet another embodiment configured to limit and/or reduce vertical motion of the cells relative to each other. As shown, in the embodiment of FIG. 11, the sheet 54 incorporates an integrated bus bar 48 and the same is connected to the top of the cells and attached by a mechanical interference fit. This embodiment also permits the control of the relative motion of cells with respect to each other, and the elimination of the need for independent bus bars and for brazing the bus bar 48 to the battery electrical terminals 50 and 52. Variations of this embodiment could be achieved by having the sheet 54 (similar to FIG. 9A) only provide an interference fit so as to prevent relative motion.

In yet another embodiment configured to limit and/or reduce vertical motion of the cells relative to each other, an adhesive is applied to the side surfaces of the cells 14 so as to dampen cell motion. A non-limiting example of an adhesive to be used is varnish.

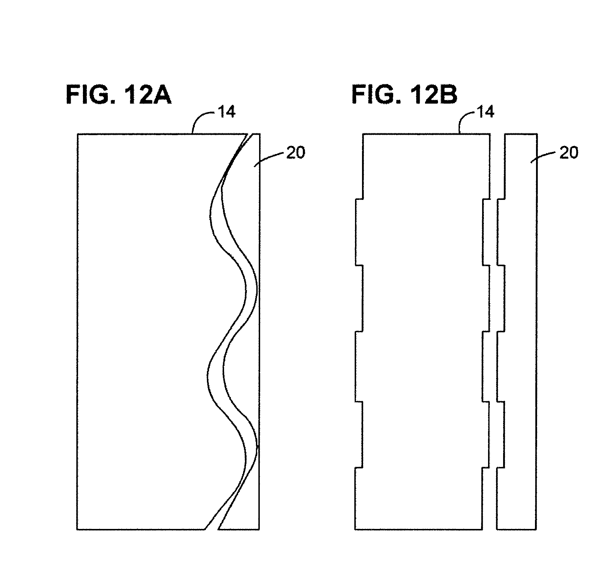

FIG. 12 illustrates yet another embodiment of the disclosed invention configured to prevent, dampen, and/or restrict vertical motion of the cells 14 relative to each other. As shown, in this embodiment, adjacent surfaces of the mica sheet 20 and cell 14 are roughened and/or corrugated so as to reduce the sliding tendency of each component with respect to the other. In FIG. 12A, the adjacent surfaces of the mica sheet 20 and the cell 14 include complementary undulations, which can have regular or irregular shapes. In FIG. 12B, the adjacent surfaces of the mica sheet 20 and the cell 14 include corresponding protrusions and depressions.

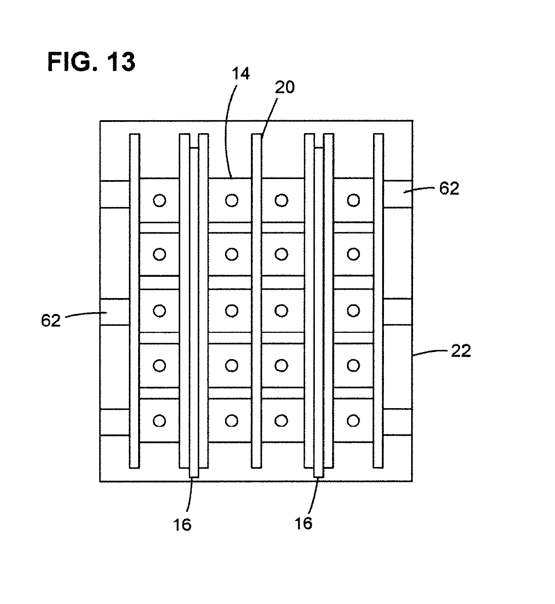

Yet another embodiment configured to reduce relative vertical motion of the cells 14 and the mica sheet 20 with respect to one another is illustrated in FIG. 13. As shown, this embodiment includes compressing the cells 14, the mica sheets 20, and the cooling plates 16 from the inner casing 22 toward a central portion of the battery by use of biasing members 62 disposed against the inner casing 22. Examples of biasing members 62 include, but are not limited to shims and springs. Compression is attained by having an over-constrained geometry. In other words, adding the biasing members applies a compressive load to the cell array and a tensile load to the battery case by geometric interference. The biasing members would be stiffer than the case material adjacent to them, thus not allowing the opposing members to separate freely, but instead to apply equal and opposite forces upon one another. As understood by those of ordinary skill in the applicable arts, the biasing members 62 will assist in dampening motion of the cells 14 vertically and may be applied with all existing materials.

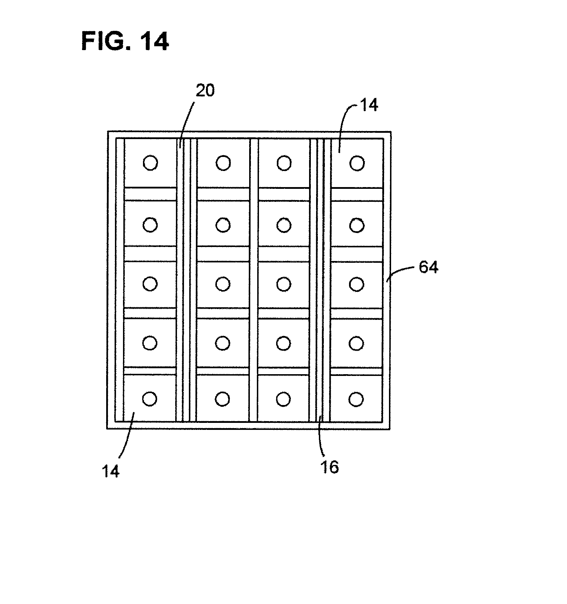

Yet another embodiment configured to reduce relative vertical motion of the cells 14 and mica sheet 20 with respect to one another is illustrated in FIG. 14. As shown, this embodiment includes wrapping the cells 14, the mica sheets 20, and the cooling plates 16 with a belt or a wrap 64. This provides a restraining force so that each cell has a lesser tendency to move vertically with respect to another adjacent cell.

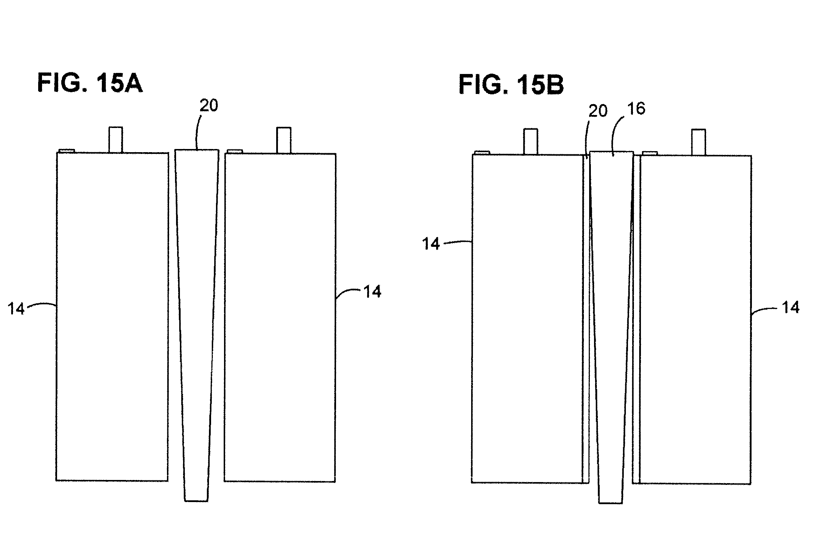

FIGS. 15A and 15B illustrate yet another embodiment configured to reduce relative vertical motion of the cells 14 with respect to each other, thus eliminating and/or reducing the tendency of the bus bars 48 to fail due to mechanical vibration with the battery is in use. As shown in FIG. 15, this embodiment includes the modification of the geometry of the mica sheets 20 (FIG. 15A) and/or the cooling ducts 16 (FIG. 15B) to be thicker at the top to prevent/resist upward cell motion, thereby dampening/restricting relative cell motion.

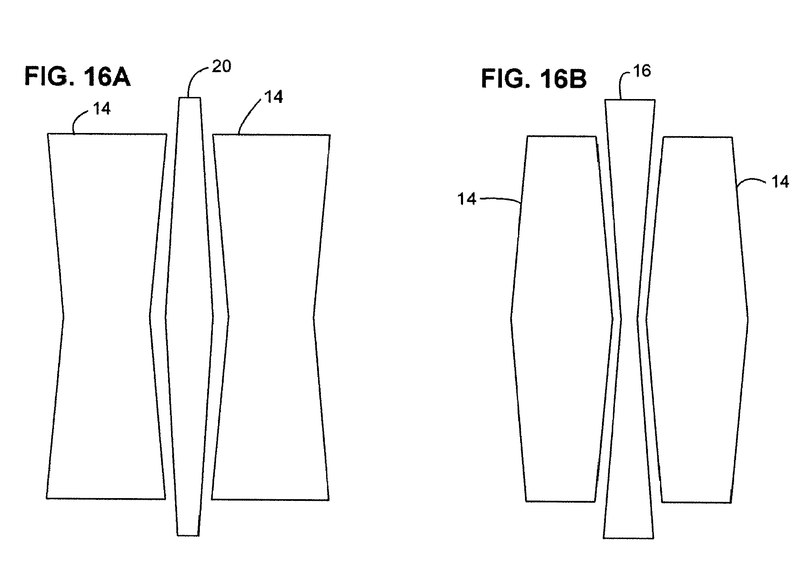

FIGS. 16A and 16B illustrate yet another embodiment configured to reduce relative vertical motion of the cells 14 with respect to each other, thus eliminating and/or reducing the tendency of the bus bars 48 to fail due to mechanical vibration with the battery is in use. As shown in FIG. 16, this embodiment includes the modification of the geometry of the cells 14 and mica sheets 20 (FIG. 16A) and/or of the cells 14 and the cooling ducts 16 (FIG. 16B) to prevent/dampen cell motion in a vertical direction. In this embodiment, a dimension characterizing a width or diameter of the cell 14 at a given location is modified such that that width or diameter is reduced or increased relative to the width or diameter at other portions of the cells 14 so as to create additional space between adjacent cells 14 while a corresponding dimension of the mica sheets is increased or reduced to accommodate the changes in the cell geometry. As shown in FIG. 16A, in one example of this embodiment, a dimension characterizing a width or diameter of the cell 14 is modified such that, at substantially a central portion of the cells 14, that width or diameter is reduced relative to the width or diameter at the top and bottom portions of the cells 14 so as to create additional space between adjacent cells 14. The additional space created between adjacent cells 14 is then occupied by the mica sheets 20 having a larger width at the corresponding location where the width or diameter of the cells 14 is reduced, the width of the mica sheets 20 then decreasing from the central portion of the mica sheets 20 to the top and bottom portions thereof so as to match the shape of the cells 14.

As shown in the alternative embodiment of FIG. 16B, the dimension characterizing the width or diameter of the cells 14 is modified such that, at substantially a central portion of the cells 14, that width or diameter is increased relative to the width or diameter at the top and bottom of the cells 14 so as to create additional space between adjacent cells 14 at the top and bottom portions thereof. The additional space created between the adjacent cells 14 is then occupied by the cooling plates 16 having a larger width at the corresponding location where the width or diameter of the cells 14 is increased, the width of the cooling plates 16 then decreasing from the top and bottom portions so as to match the corresponding shape of the adjacent cells 14. As understood by those of ordinary skill based on the disclosed subject matter, FIG. 16 illustrates an example of the shapes of mica sheets, cells, and/or cooling plates. As indicated, these shapes do not have to be symmetrical. For example, only the cell could be made such that it is wider at the top. Or alternate cells could be made wider at the top and wider at the bottom.

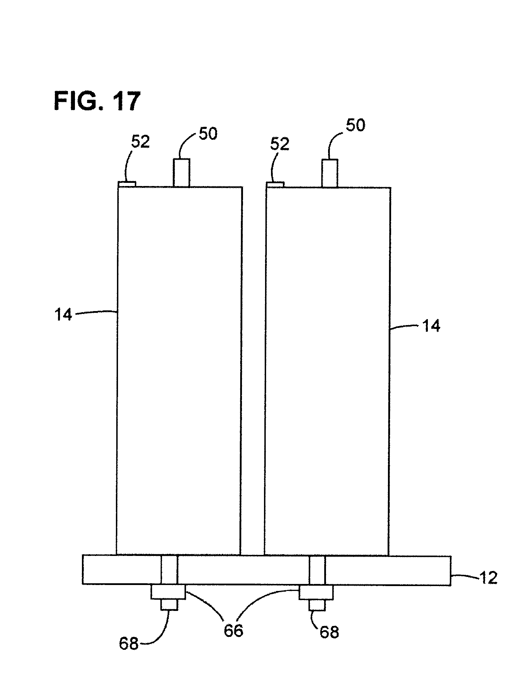

FIG. 17 illustrates yet another embodiment configured to reduce relative vertical motion of the cells with respect to each other, thus restricting vertical cell motion while, at the same time, providing stiffness to the inner assembly of the battery. As shown, this embodiment includes securing the bottom of the cells 14 to an insulated button sheet 12 by a mechanical connection, such as a bolted, riveted, welded, and/or brazed connection. In the illustration of FIG. 17, the bottom portion of the cells 14 includes a fastening member 68 that extends through an orifice in the insulated button sheet 12. A nut 66 is then used to fasten the fastening member 68 to the insulated button sheet 12.

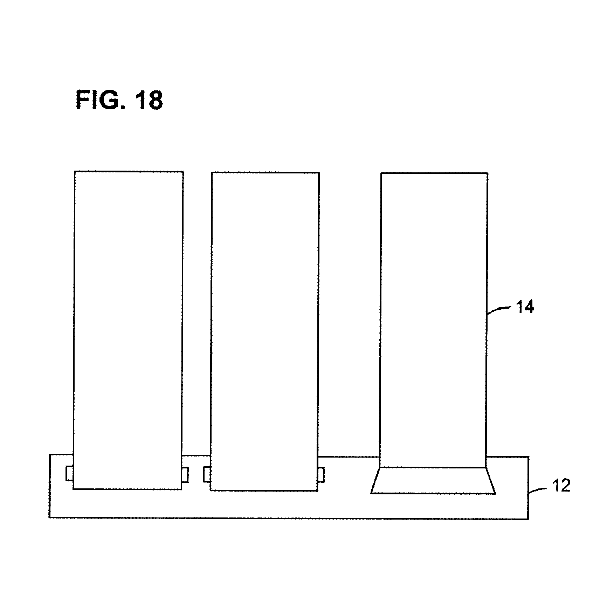

FIG. 18 illustrates yet another embodiment configured to reduce relative vertical motion of the cells with respect to each other, thus also restricting vertical cell motion while, at the same time, providing stiffness to the inner assembly of the battery. As shown, this embodiment includes a geometric modification of the portion of the cells 14 in contact with the insulated button sheet 12 so as to integrate or impregnate the former into the latter. As understood by those of ordinary skill in the applicable arts, this integration or impregnation process may be accomplished by use of varnish, epoxy, a grooved connection, or a dimpled connection between the bottom portions of the cells 4 and the insulated button sheets 12. As appreciated by those of ordinary skill, several alternative ways for this integration are well within the subject matter disclosed. For example, in the first illustration of FIG. 18, a projection may be created all around the cell, in the second, such projections are provided on in a few places (may be two hemispherical projection), and in the third illustration, the shape of the projection may be triangular and the cells could be slid or squeezed into it. Other variations could allow the cell and the inner assembly to define geometries such that the cell can be latched into place upon installation. Various styles of geometric discontinuities (protrusions) for the purpose of anchoring the cell bottom in a solidly formed base or protrusions could be on the base with corresponding dimples in the cell case.

While the disclosed embodiments of the subject matter described herein have been shown in the drawings and fully described above with particularity and detail in connection with several exemplary embodiments, it will be apparent to those of ordinary skill in the art that many modifications, changes, and omissions are possible without materially departing from the novel teachings, the principles and concepts set forth herein, and advantages of the subject matter recited in the appended claims. Hence, the proper scope of the disclosed innovations should be determined only by the broadest interpretation of the appended claims so as to encompass all such modifications, changes, and omissions. In addition, the order or sequence of any process or method steps may be varied or re-sequenced according to alternative embodiments. Finally, in the claims, any means-plus-function clause is intended to cover the structures described herein as performing the recited function and not only structural equivalents, but also equivalent structures.

Various aspects and embodiments of the present invention are defined by the following numbered clauses:
1. A battery, comprising:
   a plurality of cooling plates;
   a plurality of cells disposed between adjacent cooling plates;
   a plurality of insulating sheets disposed between plurality of cells;
   a plurality of bus bars interconnecting the plurality of cells;
   an inner casing surrounding the plurality of cooling plates, the plurality of cells, the plurality of insulating sheets, and the plurality of bus bars;
   an outer casing surrounding the inner casing so as to form a gap therebetween;
   a layer of insulating material disposed inside at least a portion of the gap; and
   means for preventing motion of the cells relative to one another.
2. The battery according to clause 1, wherein the means for preventing motion comprises at least one joist hanger connected to a side surface of at least one of the cooling plates, the at least one joist hanger being configured to suspend at least one cell from the at least one cooling plate.
3. The battery according to clause 2, wherein the at least one joist hanger comprises a pair of vertically extending stirrups connected by a base support, the base support being configured to support a bottom portion of the at least one cell being suspended by the at least one joist hanger.
4. The battery according to clause 1, further comprising:
   a button sheet having a plurality of buttons configured to support the plurality of cells, wherein the means for preventing motion comprises beam sections disposed between buttons on the button sheet.
5. The battery according to clause 4, wherein the beam sections are disposed substantially perpendicular to the plurality of cooling plates.
6. The battery according to clause 5, wherein each beam section has a cross-sectional shape selected from the group consisting of a triangular shape, a square shape, an elliptical shape, and combinations thereof.
7. The battery according to clause 1, wherein the means for preventing motion comprises a brace member to connect the plurality of cooling plates to each other at a backside of the battery.
8. The battery according to clause 7, wherein the brace member is selected from the group consisting of a strap, a band, a wire, a spring, and a metal sheet.
9. The battery according to clause 1, wherein the means for preventing motion comprises a firebrick disposed in the gap between the inner casing and the outer casing along a bottom portion of the battery.
10. The battery according to clause 1, wherein the means for preventing motion comprises a plurality of firebrick pieces disposed discretely in the gap between the inner casing and the outer casing along a bottom portion of the battery.
11. The battery according to clause 1, wherein the means for preventing motion comprises beam sections connected to the inner casing and extending into layer of insulation material.
12. The battery according to clause 11, wherein the beam sections are selected from the group consisting of ribs, plates, and combinations thereof.
13. The battery according to clause 12, wherein the ribs and plates are connected to a button sheet configured to support the plurality of cells.
14. The battery according to clause 1, wherein the means for preventing motion comprises beam sections connected to the outer casing and extending into the layer of insulation material.
15. The battery according to clause 14, wherein the beam sections are selected from the group consisting of ribs, plates, and combinations thereof.
16. The battery according to clause 15, wherein the ribs and plates are connected to a button sheet configured to support the plurality of cells.
17. The battery according to clause 1, wherein the means for preventing motion comprises at least one biasing member disposed on a top portion of at least one of the cells and configured to apply a compressive load from the inner casing to the at least one of the cells.
18. The battery according to clause 17, wherein the at least one biasing member is a compressive disc or a spring.
19. The battery according to clause 1, wherein the means for preventing motion comprises at least one of bus bars having a cross-sectional shape that is longer vertically upward along a longitudinal axis of the cells and narrower in a transverse direction.
20. The battery according to clause 1, wherein the means for preventing motion comprises a sheet of electrically insulating material disposed on top of the cells such that first and second electrical connectors of at least one cell protrude from the sheet.
21. The battery according to clause 20, wherein the sheet extends along a direction substantially parallel to the bus bars, the sheet including openings on a surface thereof to receive a top portion of the at least one cell.
22. The battery according to clause 21, wherein the sheet is made of mica, ceramic, or silicone ceramic.
23. The battery according to clause 1, wherein the means for preventing motion comprises a plurality of sheets of electrically insulating material disposed on top of the cells extending along a direction substantially parallel to the bus bars such that a first electrical connector of a cell of the plurality, a second electrical connector of an adjacent cell, and the bus bar connected therebetween are disposed between two adjacent sheets.
24. The battery according to clause 1, wherein the means for preventing motion comprises a plurality of sheets of electrically insulating material disposed under the plurality of bus bars, the plurality of sheets extending along a direction substantially perpendicular to the bus bars.
25. The battery according to clause 1, wherein the means for preventing motion comprises a plurality of first sheets of an insulating material, each of the first sheets having the corresponding bus bar integrated therein and being disposed on top portions of at least two adjacent cells.
26. The battery according to clause 25, wherein each of the bus bars are connected to the corresponding cells by a mechanical interference fit.
27. The battery according to clause 25, wherein the means for preventing motion further comprises a plurality of second sheets of an insulating material, each of the second sheets being disposed on the corresponding bottom portions of the at least two adjacent cells, and at least two fasteners connecting the first sheet to the second sheet with the at least two adjacent cells therebetween, electrical connections between the at least two adjacent cells being made by contact pressure exerted by the at least two fasteners.
28. The battery according to clause 1, wherein the means for preventing motion comprises an adhesive applied to a side surface of the cells.
29. The battery according to clause 1, wherein the means for preventing motion comprises roughened and/or corrugated surfaces of adjacent mica sheets and cells.
30. The battery according to clause 29, wherein the roughened and/or corrugated surfaces include undulations on the surfaces of the mica sheets and of the cells that are complimentary to each other.
31. The battery according to clause 29, wherein the roughened and/or corrugated surfaces include protrusions and depressions on the surfaces of the mica sheets and of the cells that are complimentary to each other.
32. The battery according to clause 1, wherein the means for preventing motion comprises at least one biasing member compressing the plurality cells, the plurality of insulating sheets, and/or the plurality of cooling plates from the inner casing toward a central portion of the battery.
33. The battery according to clause 1, wherein the means for preventing motion comprises a wrap or belt disposed around the plurality cells, the plurality of insulating sheets, and/or the plurality of cooling plate.
34. The battery according to clause 1, wherein the means for preventing motion comprises each of the insulating sheets having a cross-sectional area that is larger at a location near a top portion of each of the cells compared to a location near a bottom portion of each of the cells.
35. The battery according to clause 1, wherein the means for preventing motion comprises each of the cooling plates having a cross-sectional area that is larger at a location near a top portion of each of the cells compared to a location near a bottom portion of each of the cells.
36. The battery according to clause 1, wherein the means for preventing motion comprises each of the cells having a dimension characterizing a width or diameter thereof that is smaller at a first portion of the cell compared to the width or diameter of the cell at a second portion thereof, and each of the insulating sheets having a dimension characterizing a width or diameter thereof that is correspondingly larger at the first portion of the cell compared to the width or diameter of that insulating sheet at the second portion of the cell.
37. The battery according to clause 1, wherein the means for preventing motion comprises each of the cells having a dimension characterizing a width or diameter thereof that is larger at a first portion of the cell compared to the width or diameter of the cell at a second portion thereof, and each of the insulating cooling plates having a dimension characterizing a width or diameter thereof that is correspondingly smaller at the first portion of the cell compared to the width or diameter of that cooling plate at the second portion of the cell.
38. The battery according to clause 4, wherein the means for preventing motion comprises at least one fastener disposed at a bottom portion of at least one cell and extending through the button sheet, the at least one fastener being configured to fasten the at least one cell to the button sheet.
39. The battery according to clause 38, wherein the at least one fastener is connected to the button sheet by a connection selected from the group consisting of a bolted connection, a riveted connection, a brazed connection, a welded connection, and combinations thereof.
40. The battery according to clause 4, wherein the means for preventing motion comprises an integration of a bottom portion of a cell into the button sheet.
41. The battery according to clause 40, wherein the integration is selected from the group consisting of varnish, a grooved connection, or a dimpled connection.

## Claims

1. A battery, comprising:
a plurality of cooling plates;
a plurality of cells disposed between adjacent cooling plates;
a plurality of insulating sheets disposed between plurality of cells;
a plurality of bus bars interconnecting the plurality of cells;
an inner casing surrounding the plurality of cooling plates, the plurality of cells, the plurality of insulating sheets, and the plurality of bus bars;
an outer casing surrounding the inner casing so as to form a gap therebetween;
a layer of insulating material disposed inside at least a portion of the gap; and
means for preventing motion of the cells relative to one another.

2. The battery according to claim 1, further comprising:
a button sheet having a plurality of buttons configured to support the plurality of cells, wherein the means for preventing motion comprises beam sections disposed between buttons on the button sheet.

3. The battery according to claim 2, wherein the means for preventing motion comprises at least one fastener disposed at a bottom portion of at least one cell and extending through the button sheet, the at least one fastener being configured to fasten the at least one cell to the button sheet.

4. The battery according to claim 3, wherein the at least one fastener is connected to the button sheet by a connection selected from the group consisting of a bolted connection, a riveted connection, a brazed connection, a welded connection, and combinations thereof.

5. The battery according to claim 2, wherein the means for preventing motion comprises an integration of a bottom portion of a cell into the button sheet.

6. The battery according to claim 5, wherein the integration is selected from the group consisting of varnish, a grooved connection, or a dimpled connection.

7. The battery according to claim 1, wherein the means for preventing motion comprises beam sections connected to the inner casing or the outer casing and extending into layer of insulation material.

8. The battery according to claim 1, wherein the means for preventing motion comprises at least one biasing member disposed on a top portion of at least one of the cells and configured to apply a compressive load from the inner casing to the at least one of the cells.

9. The battery according to claim 1, wherein the means for preventing motion comprises at least one of bus bars having a cross-sectional shape that is longer vertically upward along a longitudinal axis of the cells and narrower in a transverse direction.

10. The battery according to claim 1, wherein the means for preventing motion comprises a sheet of electrically insulating material disposed on top of the cells such that first and second electrical connectors of at least one cell protrude from the sheet.

11. The battery according to claim 1, wherein the means for preventing motion comprises a plurality of sheets of electrically insulating material disposed on top of the cells extending along a direction substantially parallel to the bus bars such that a first electrical connector of a cell of the plurality, a second electrical connector of an adjacent cell, and the bus bar connected therebetween are disposed between two adjacent sheets.

12. The battery according to claim 1, wherein the means for preventing motion comprises a plurality of first sheets of an insulating material, each of the first sheets having the corresponding bus bar integrated therein and being disposed on top portions of at least two adjacent cells.

13. The battery according to claim 1, wherein the means for preventing motion comprises an adhesive applied to a side surface of the cells.

14. The battery according to claim 1, wherein the means for preventing motion comprises roughened and/or corrugated surfaces of adjacent mica sheets and cells.

15. The battery according to claim 1, wherein the means for preventing motion comprises at least one biasing member compressing the plurality cells, the plurality of insulating sheets, and/or the plurality of cooling plates from the inner casing toward a central portion of the battery.
